# EUROPÄISCHE PATENTSCHRIFT

(11) **EP 1 087 215 B1**
(45) Veröffentlichungstag und Bekanntmachung des Hinweises auf die Patenterteilung: **14.06.2006**
(21) Anmeldenummer: 00115322.0
(22) Anmeldetag: 14.07.2000
(51) Int. Cl.: G01J 1/18, G01J 1/32

(54) **Verfahren zum Betrieb eines optoelektronischen Kontrasttasters**
Method for operating an optoelectronic contrast detector
Méthode de fonctionnement d'un détecteur de contraste optoélectronique

(30) Priorität: 22.09.1999 DE 19945442
(43) Veröffentlichungstag der Anmeldung: 28.03.2001
(73) Patentinhaber: SICK AG, 79183 Waldkirch, Breisgau (DE)
(72) Erfinder: Kietz, Daniel, 79359 Riegel (DE)
(74) Vertreter: Manitz, Finsterwald & Partner GbR

(56) Entgegenhaltungen:
- EP-A- 0 330 501
- EP-A- 0 892 280
- DE-A- 19 747 248
- US-A- 5 281 810
- US-A- 5 933 242

## Beschreibung

Die Erfindung betrifft ein Verfahren zum Betrieb eines optoelektronischen Kontrasttasters, bei dem eine Kontrastmarke mit Sendelicht beaufschlagt wird, in Abhängigkeit von dem von der Kontrastmarke reflektierten Sendelicht ein Empfangssignal erzeugt wird und das Empfangssignal verstärkt wird.

Kontrasttaster dienen zur Detektion von mit einer Kontrastmarke versehenen Gegenständen. Die Kontrastmarke reflektiert das Sendelicht ohne Änderung der Wellenlänge, oder sie remittiert aufgrund einer Lumineszenzanregung in einem bezüglich des Sendelichts verschobenen Wellenlängenbereich. Ein Teil des von der Kontrastmarke reflektierten bzw. remittierten Sendelichts wird von dem Kontrasttaster empfangen, verstärkt und hinsichtlich des Kontrasts der Kontrastmarke gegenüber ihrer Umgebung ausgewertet. Der Betrieb bekannter Kontrasttaster ist jedoch in nachteiliger Weise auf die Erkennung einer vorbestimmten Auswahl von Kontrastmarken begrenzt.

Aus der US 5,281,810 ist eine photoelektrische Steuereinheit bekannt, mit der sich der eigene Betriebsbereich bestimmen lässt.

Die EP 0 892 280 A2 offenbart einen Teach-Vorgang zur Unterteilung einer Lichtempfangseinheit in Empfangszonen oder zum Einlernen von Kontrastunterschieden.

Aus der DE 197 47 248 A1 ist es bekannt, während eines Abgleichvorgangs Schwellwerte für den Betrieb einer Reflexionslichtschranke festzulegen.

Die US 5,933,242 offenbart die Möglichkeit, vor Inbetriebnahme eines optoelektronischen Sensors im Rahmen eines Initialisierungsprozesses bei objektfreiem Überwachungsbereich einen Schwellwert automatisch einzustellen.

Die EP 0 330 501 A2 beschreibt eine Schaltung zur automatischen Verstärkungsregelung im Zusammenhang mit Reflexions- und Transmissionsmessungen.

Es ist eine Aufgabe der Erfindung, ein Verfahren zum Betrieb eines Kontrasttasters zu schaffen, das hinsichtlich des Einsatzbereichs des Kontrasttasters eine höhere Flexibilität bietet.

Diese Aufgabe wird durch ein Verfahren mit den Merkmalen des Anspruchs 1 gelöst.

Bei dem erfindungsgemäßen Betriebsverfahren ist also ein Einlernvorgang vorgesehen, durch den anhand einer typischen Einlernmarke die Verstärkung einem speziellen Anwendungsfall angepaßt wird. Ausgehend von einer Grundeinstellung wird der Verstärkungsfaktor je nach ermittelter Kategorie der Reflexion für den nachfolgenden eigentlichen Detektionsbetrieb des Kontrasttasters ausgewählt und somit geändert.

Hierfür wird in dem "teach-in"-Schritt anhand des Empfangssignals zumindest überprüft, ob das von der Einlernmarke reflektierte Sendelicht auf die Kategorie der diffusen Reflexion oder die Kategorie der geometrischen Reflexion schließen läßt. In die erst genannte Kategorie fallen Lumineszenzmarken sowie Kontrastmarken, die das Sendelicht diffus reflektieren oder im wesentlichen absorbieren (schwarze Marken). Dagegen fallen unter die Kategorie der geometrischen Reflexion glänzende Kontrastmarken wie beispielsweise Spiegel, Reflektoren oder Glanzfolie, die das Sendelicht vorwiegend in Richtung des Kontrasttasters reflektieren.

Das Verfahren ermöglicht somit eine automatische kategorische Einordnung der zu detektierenden Kontrastmarke. Auf Grundlage dieser einfachen Unterscheidung wird ein Verstärkungsfaktor aktiviert, der für die ermittelte Kategorie der Reflexion eine optimale Auflösung der Kontraste liefert.

Die Erfindung bietet somit einen erhöhten Einsatzbereich des Kontrasttasters, da dieser sowohl für Marken der diffus reflektierenden Kategorie als auch für Marken der geometrisch reflektierenden Kategorie verwendet werden kann. Der konstruktive Aufwand zur Verwirklichung der Erfindung ist gering, da lediglich die im Rahmen des "teach-in"-Schritts durchgeführte Überprüfung und Auswahl in die ohnehin vorhandene Auswertelogik einprogrammiert werden muß, jedoch keine neuen Bauelemente erforderlich sind.

Gegenüber einem möglichen manuellen Umschalten zwischen verschiedenen Verstärkungsfaktoren durch den Benutzer des Kontrasttasters bietet die erfindungsgemäße Überprüfung der Reflexionskategorie den Vorteil, daß nicht pauschal anhand der Art der Kontrastmarke, sondern auf Grundlage des tatsächlich detektierten Empfangssignals über den auszuwählende Verstärkungsfaktor entschieden wird. Dadurch wird beispielsweise bei einer als Glanzfolie ausgebildeten Kontrastmarke, die sich jedoch in vergleichsweise großem Abstand vom Kontrasttaster befindet und deshalb zu einem relativ geringen Empfangssignal führt, die höhere Verstärkung gemäß der Kategorie der diffusen Reflexion ausgewählt. Das erfindungsgemäße Verfahren berücksichtigt also automatisch die jeweilige Tastweite bzw. einen durch unterschiedliche Tastweiten bedingten Pegelunterschied des Empfangssignals.

Die Grundeinstellung des Verstärkungsfaktors wird beispielsweise werkseitig empirisch und spezifisch für die bevorzugte Anwendung des Kontrasttasters ermittelt und in diesen einprogrammiert.

Vorzugsweise erfolgt die Unterscheidung der Kategorien der Reflexion anhand der Höhe des Empfangssignals relativ zu einem vorbestimmten Unterscheidungspegel. Es wird also überprüft, ob das der Intensität des reflektierten und empfangenen Sendelichts entsprechende Empfangssignal den Unterscheidungspegel überschreitet oder unterschreitet, oder ob das Empfangssignal innerhalb eines durch zwei vorbestimmte Unterscheidungspegel gebildeten Pegelfensters liegt.

Es ist ferner bevorzugt, wenn die Überprüfung der Kategorie der Reflexion iterativ mit jeweils verändertem bzw. neu ausgewähltem Verstärkungsfaktor durchgeführt wird, bis eine Unterschreitung bzw. Überschreitung des zugrunde gelegten Unterscheidungspegels festgestellt wird. Der "teach-in"-Schritt wird also unter sukzessiver Anpassung an den Unterscheidungspegel wiederholt.

Falls im Betrieb des Kontrasttasters mehrere, beispielsweise drei Empfangssignale ermittelt und ausgewertet werden, die für dieselbe Kontrastmarke jeweils unterschiedlichen Wellenlängenbereichen des reflektierten bzw. empfangenen Lichts entsprechen, so werden vorzugsweise auch der "teach-in"-Schritt und die Auswahl des Verstärkungsfaktors für diese unterschiedlichen Wellenlängenbereiche separat durchgeführt. Mit anderen Worten wird für jede der berücksichtigten Farben eine individuelle Verstärkung ausgewählt.

Die Erfindung betrifft ferner einen optoelektronischen Kontrasttaster, der zur Durchführung des erfindungsgemäßen Verfahrens geeignet ist. Dieser Kontrasttaster besitzt zumindest einen Sender zum Aussenden des Sendelichts in Richtung der Kontrastmarke, einen Empfänger zum Empfang des hiervon reflektierten bzw. remittierten Sendelichts und zum Erzeugen des entsprechenden Empfangssignals, einen Verstärker zur Verstärkung dieses Empfangssignals mit einem Verstärkungsfaktor, eine Auswerteeinheit zur Auswertung des Empfangssignals sowie eine Steuereinheit, durch welche die Durchführung des "teach-in"-Schritts und die Auswahl des Verstärkungsfaktors, sowie gegebenenfalls eine Wiederholung dieser Schritte, gesteuert werden.

Weitere Ausführungsformen der Erfindung sind in den Unteransprüchen aufgeführt.

Die Erfindung wird nachfolgend beispielhaft unter Bezugnahme auf die Zeichnungen beschrieben; in diesen zeigen:
- Fig. 1: eine schematische Darstellung eines erfindungsgemäßen Kontrasttasters,
- Fig. 2: die Signalpegel verschiedener unverstärkter Empfangssignale sowie unterschiedlichen Verstärkungsfaktoren entsprechende Eingangsdynamikbereiche der Verstärkung, und
- Fig. 3a bis 3c: die Signalpegel der mit jeweils unterschiedlichem Verstärkungsfaktor gemäß Fig. 2 verstärkten Empfangssignale.

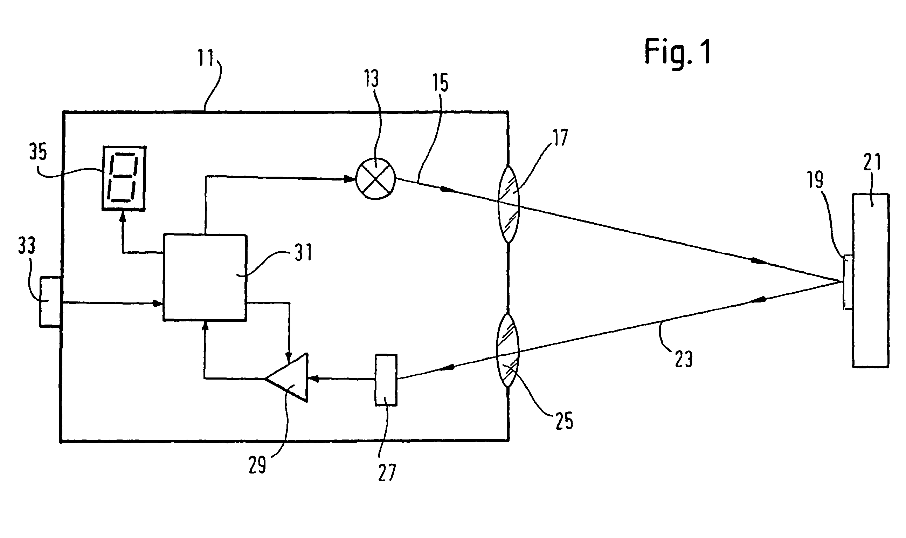

Der Kontrasttaster gemäß Fig. 1 weist in einem Gehäuse 11 einen Sender 13 auf, der beispielsweise durch eine LED oder eine Laserdiode gebildet ist. Der Sender 13 emittiert einen Sendestrahl 15 des sichtbaren, infraroten oder ultravioletten Wellenlängenbereichs, der nach Durchlaufen einer Sendelinse 17 außerhalb des Kontrasttasters auf eine Kontrastmarke oder Einlernmarke 19 trifft, die an einem Gegenstand 21 angebracht ist.

Der Sendestrahl 15 wird von der Kontrastmarke 19 zumindest teilweise in Richtung des Kontrasttasters reflektiert, wobei er als Empfangsstrahl 23 nach Durchlaufen einer Empfangslinse 25 einen photoelektrischen Empfänger 27 beaufschlagt, dem ein Verstärker 29 und eine Steuer- und Auswerteeinheit 31 nachgeschaltet sind. Die Steuer- und Auswerteeinheit 31 ist außerdem mit dem Sender 13, einem Auslöseknopf 33 sowie einem optischen Anzeigeelement 35 verbunden.

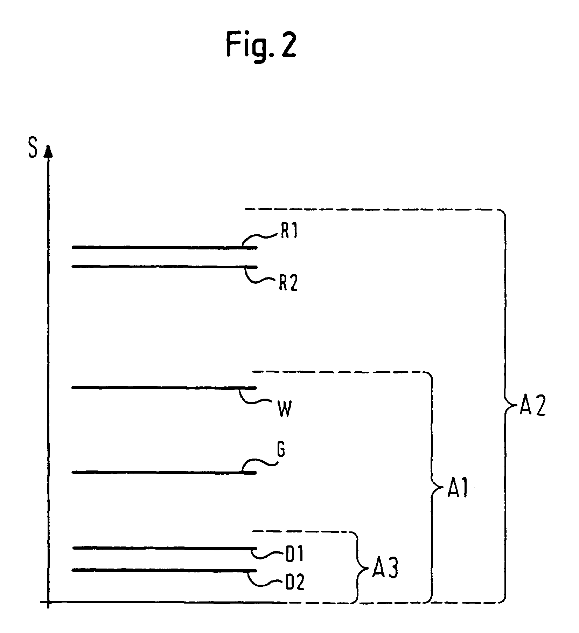

Fig. 2 zeigt die Signalpegel S verschiedener, von dem Empfänger 27 erzeugter und noch nicht verstärkter Empfangssignale. Im einzelnen zeigt Fig. 2 die Signalpegel R1, R2 einer glänzenden und somit hochreflektierenden Kontrastmarke 19, die Signalpegel W und G einer diffus reflektierenden weißen bzw. grauen Kontrastmarke 19 sowie die Signalpegel D1, D2 zweier dunkler, nahezu schwarzer Kontrastmarken 19.

Ferner sind in Fig. 2 drei Verstärkungsfaktoren A1, A2 und A3 anhand der Ausdehnung ihres jeweiligen Eingangsdynamikbereichs dargestellt.

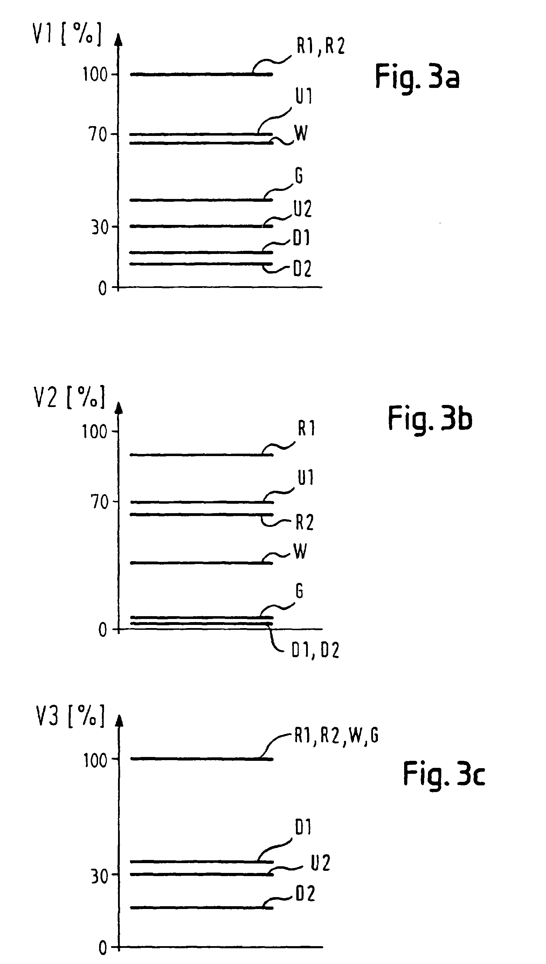

Fig. 3a, 3b und 3c zeigen die Signalpegel V1, V2 bzw. V3 der in Fig. 2 dargestellten Empfangssignale nach deren Verstärkung jeweils mit dem Verstärkungsfaktor A1, A2 bzw. A3. Die Signalpegel V1, V2 bzw. V3 sind prozentual bezüglich des Ausgangsdynamikbereichs des Verstärkers 29 dargestellt.

### Der in Fig. 1 gezeigte Kontrasttaster wird folgendermaßen betrieben:

In einen nichtflüchtigen Speicher der Steuer- und Auswerteeinheit 31 ist als Grundeinstellung der Verstärkungsfaktor A1 einprogrammiert, der zur Detektion von diffus reflektierenden Kontrastmarken 19 vorgesehen ist.

Für das Einlernen einer nachfolgend zu detektierenden Serie von Kontrastmarken 19 wird eine Einlernmarke 19 in den Strahlengang 15, 23 des Kontrasttaster gebracht, und der Auslöseknopf 33 wird betätigt. Dadurch wird der "teach-in"-Schritt ausgelöst, in dem der Sender 13 von der Steuer- und Auswerteeinheit 31 zur Abgabe des Sendestrahls 15 veranlaßt wird und der Empfänger 27 in Abhängigkeit des von der Einlernmarke 19 reflektierten Sendelichts ein Empfangssignal erzeugt und dieses an den Verstärker 29 weiterleitet. Dort wird das Empfangssignal mit dem Verstärkungsfaktor A1 verstärkt und an die Steuer- und Auswerteeinheit 31 weitergeführt.

Je nach Reflexionsvermögen der verwendeten Einlernmarke 19 kann das vom Empfänger 27 erzeugte Empfangssignal einen sehr unterschiedlichen Signalpegel S besitzen, wie in Fig. 2 gezeigt. Falls die gesamte Dynamik dieser Signalpegel S vom Verstärker 29 verstärkt würde, könnten einander benachbarte Signalpegel, wie beispielsweise der Kontrast zwischen den beiden relativ niedrigen und eng benachbarten Signalpegeln D 1 und D2, nicht mehr ohne weiteres identifiziert werden. Daher verstärken herkömmliche zur Detektion von diffus reflektierenden Kontrastmarken 19 vorgesehene Kontrasttaster mit einem Mindestverstärkungsfaktor, wie dies auch als Grundeinstellung A1 für den Kontrasttaster gemäß Fig. 1 vorgesehen ist.

Fig. 3a zeigt das Ergebnis der Verstärkung mit dem Verstärkungsfaktor A1: Diejenigen verstärkten Signalpegel V1, die einer diffus reflektierenden Marke 19 entsprechen, also die Signalpegel W, G, D 1 und D2, sind nach ihrer Verstärkung unterscheidbar voneinander getrennt. Dagegen liegen die beiden einer hochreflektierenden Marke 19 entsprechenden Signalpegel R1, R2 ununterscheidbar im Sättigungsbereich der Verstärkung A1 (100% in Fig. 3a). Bei Einstellung des Verstärkungsfaktors A1 werden also nur diejenigen Signalpegel S unterscheidbar verstärkt, die in einem Dynamikbereich zwischen einem Signalpegel Null bis knapp oberhalb des Signalpegels W liegen (Fig. 2).

Um gegebenenfalls auch diese beiden verstärkten Signalpegel R1,R2 auflösen zu können, wird bei dem "teach-in"-Schritt des erfindungsgemäßen Verfahrens kategorisch überprüft, ob der für die konkrete Anwendung relevante, der Einlernmarke 19 entsprechende verstärkte Signalpegel V1 unterhalb oder oberhalb eines Unterscheidungspegels U 1 entspricht (Fig. 3a). Dieser Unterscheidungspegel U1 ist werkseitig in die Steuer- und Auswerteeinheit 31 einprogrammiert worden. Der Unterscheidungspegel U 1 kann beispielsweise einen Wert zwischen 70 % und 90 % des in den Fig. 3a bis 3c jeweils gezeigten Ausgangsdynamikbereichs des Verstärkers 29 besitzen. In der Darstellung gemäß Fig. 3a liegt der Unterscheidungspegel U 1 knapp oberhalb des Signalpegels W einer diffus reflektierenden weißen Kontrastmarke 19, der mit dem Verstärkungsfaktor A1 verstärkt ist.

Falls die erläuterte Überprüfung ergibt, daß der im Rahmen des "teach-in"-Schritts ermittelte und verstärkte Signalpegel V1 unterhalb des Unterscheidungspegels U1 liegt, wird die Einlernmarke 19 der Kategorie der diffusen Reflexion zugeordnet, und der bereits eingestellte Verstärkungsfaktor A1 wird für den nachfolgenden Detektionsbetrieb des Kontrasttasters beibehalten (Signalpegel W, G, D 1 und D2 in Fig. 3a).

Falls dagegen der Signalpegel V1, zum Beispiel der Signalpegel R2 einer hochreflektierenden Einlernmarke 19, oberhalb des Unterscheidungspegels U 1 liegt, wird die Einlernmarke 19 der Kategorie der geometrischen Reflexion zugeordnet, und die Steuer- und Auswerteeinheit 31 wählt einen geringeren Verstärkungsfaktor aus (Signalpegel R 1 und R2 in Fig. 3a) und prüft erneut, ob der Signalpegel V1 nun unterhalb des Unterscheidungspegels U1 liegt.

Durch sukzessive derartige Verringerung des Verstärkungsfaktors sowie durch entsprechende automatische Wiederholung des "teach-in"-Schritts wird schließlich ein solcher Verstärkungsfaktor A2 erreicht, für welchen der der Einlernmarke 19 entsprechende Signalpegel V1 den Unterscheidungspegel U 1 unterschreitet. Der somit erreichte Verstärkungsfaktor A2 wird für den nachfolgenden Detektionsbetrieb beibehalten, und es wird kein weiterer "teach-in"-Schritt mehr durchgeführt. Der auf diese Art beispielsweise ermittelte Verstärkungsfaktor A2 ist in Fig. 2 gezeigt.

Das erläuterte Beispiel des eingelernten Signalpegels R2 und des erreichten, bezüglich des Verstärkungsfaktors A1 verringerten Verstärkungsfaktors A2 ist in Fig. 3b dargestellt. Die beiden jeweils einer glänzenden Kontrastmarke 19 entsprechenden und zuvor noch im Sättigungbereich (Fig. 3a) gelegenen Signalpegel R1, R2 können hier deutlich voneinander sowie auch von dem Signalpegel W einer weißen Kontrastmarke 19 unterschieden werden.

Somit kann der in Fig. 1 gezeigte Kontrasttaster durch Berücksichtigung einfacher Unterscheidungskriterien und ohne wesentlichen Zusatzaufwand wahlweise für diffus reflektierende und für glänzende Kontrastmarken 19 verwendet werden, und zwar jeweils mit voller Dynamik und entsprechend hohem Auflösungsvermögen.

Der erläuterte Wechsel des Verstärkungsfaktors wird dem Verstärker 29 von der Auswerte- und Steuereinheit 31 angezeigt, und er wird beispielsweise bei Verwendung eines Integrators für den Verstärker 29 durch Änderung der Integrationszeit erzielt.

Natürlich kann anstelle der beschriebenen Vorgehensweise auch von einer vergleichsweise geringen Verstärkung, beispielsweise von dem Verstärkungsfaktor A2 ausgegangen werden, entsprechend der Grundeinstellung eines Kontrasttaster, der bevorzugt für Kontrastmarken der Kategorie der geometrischen Reflexion vorgesehen ist. Diese geringe Verstärkung wird für den nachfolgenden Detektionsbetrieb erhöht, falls das Empfangssignal den Unterscheidungspegel unterschreitet. Für diese Vorgehensweise liegt der Unterscheidungspegel bevorzugt in einem Bereich zwischen 10% und 30% der Ausgangsdynamik der jeweils ausgewählten Verstärkung.

Falls zusätzlich zu der erläuterten Unterscheidung von Kontrastmarken 19 dunkel diffus reflektierende Marken 19 noch besser aufgelöst werden sollen als dies mit dem Verstärkungsfaktor A1 erfolgt und in Fig. 3a für die Signalpegel D1 und D2 gezeigt ist, kann das Einlernverfahren folgendermaßen erweitert werden: Falls wiederum ausgehend von einer Grundeinstellung des Verstärkungsfaktors A1 in dem ersten "teach-in"-Schritt bei der erläuterten Überprüfung des Unterscheidungspegels U 1 ein Unterschreiten desselben festgestellt wird, wird - noch ohne Änderung des Verstärkungsfaktors A1 - zusätzlich überprüft, ob das einzulernende verstärkte Empfangssignal V 1 auch unterhalb eines weiteren Unterscheidungspegels U2 liegt. Dieser weitere Unterscheidungspegel U2 liegt vorzugsweise in einem Bereich zwischen 10% und 30% der Ausgangsdynamik der jeweils eingestellten Verstärkung.

Falls das Ergebnis dieser zusätzlichen Überprüfung positiv ist, wie beispielsweise für den in Fig. 3a gezeigten Signalpegel D1 der Fall, wird der Verstärkungsfaktor unter Wiederholung des "teach-in"- bzw. Überprüfungsschritts allmählich erhöht, bis der verstärkte Signalpegel der betrachteten Einlernmarke 19 den weiteren Unterscheidungspegel U2 überschreitet. Der somit ausgewählte Verstärkungsfaktor wird für den nachfolgenden Detektionsbetrieb ausgewählt. Für das genannte Beispiel des Signalpegels D 1 ist dieser Zustand bei einem Verstärkungsfaktor A3 erreicht, der wesentlich höher ist als der ursprüngliche Verstärkungsfaktor A1.

Fig. 3c zeigt das Ergebnis einer Verstärkung mit dem Verstärkungsfaktor A3. Der Signalpegel D 1 liegt nun gerade oberhalb des weiteren Unterscheidungspegels U2, und er kann deutlich besser von dem benachbarten Signalpegel D2 unterschieden werden als bei dem ursprünglichen Verstärkungsfaktor A1 (Fig. 3a).

Hinsichtlich der Darstellung der verschiedenen Eingangsdynamikbereiche des Verstärkers 29 in Fig. 2 ist zu bemerken, daß der Ausgangsdynamikbereich des Verstärkers 29 unabhängig von der Wahl des Verstärkungsfaktors A1, A2 oder A3 ist und beispielsweise 0 bis 5 Volt oder - nach einer Digitalisierung - 256 bit beträgt. Je größer also der ausgewählte Verstärkungsfaktor A1, A2 bzw. A3 ist, um so geringer ist der Eingangsdynamikbereich, also der Bereich der nach der Verstärkung noch unterscheidbaren Signalpegel S.

Zu der übrigen Funktionsweise des Kontrasttasters ist noch anzumerken, daß nach Ermittlung der Kategorie der Reflexion der ausgewählte Verstärkungsfaktor A1, A2 oder A3 an dem Anzeigeelement 35 angezeigt wird. Außerdem wird in Abhängigkeit von dem Empfangssignal der Einlernmarke 19 sowie von dem ausgewählten Verstärkungsfaktor A1, A2 oder A3 eine Betriebsschaltschwelle bestimmt, bei deren Überschreiten oder Unterschreiten im nachfolgenden Detektionsbetrieb des Kontrasttasters ein Gegenstandsfeststellungssignal ausgelöst wird.

Während die Auswahl des Verstärkungsfaktors A1, A2 oder A3 bevorzugt vor einer nachfolgenden Detektion einer Serie von Kontrastmarken 19 durchgeführt wird, ist es auch möglich, das aktuelle Empfangssignal während des eigentlichen Detektionsbetriebs zu überwachen. Durch einen regelmäßigen Vergleich mit dem ursprünglich eingelernten Empfangssignal kann eine allmähliche Signalverschiebung aufgrund einer Verschmutzung der Sende- und Empfangsoptik 17, 25 oder aufgrund einer elektronischen Drift der Bauelemente 13, 27, 29, 31 erkannt werden, und der Verstärkungsfaktor kann an diese Änderung angepaßt werden.

Im Unterschied zu einer einfachen Verschiebung der Betriebsschaltschwelle wird dabei der gesamte Eingangsdynamikbereich A1, A2 bzw. A3 der Verstärkung geändert (Fig. 2). Dadurch kommt es zu keiner Verschlechterung der Auflösung.

### Bezugszeichenliste

- 11: Gehäuse
- 13: Sender
- 15: Sendestrahl
- 17: Sendelinse
- 19: Kontrastmarke bzw. Einlernmarke
- 21: Gegenstand
- 23: Empfangsstrahl
- 25: Empfangslinse
- 27: Empfänger
- 29: Verstärker
- 31: Steuer- und Auswerteeinheit
- 33: Auslöseknopf
- 35: Anzeigeelement

- A1: Verstärkungsfaktor für Kategorie der diffusen Reflexion
- A2: Verstärkungsfaktor für Kategorie der geometrischen Reflexion
- A3: Verstärkungsfaktor für Kategorie der dunklen diffusen Reflexion
- D1, D2: Signalpegel einer dunklen Marke
- G: Signalpegel einer grauen Marke
- R1, R2: Signalpegel einer hochreflektierenden Marke
- S: unverstärkter Signalpegel
- U1, U2: Unterscheidungspegel
- V1, V2, V3: verstärkter Signalpegel
- W: Signalpegel einer weißen Marke

## Patentansprüche

1. Verfahren zum Betrieb eines optoelektronischen Kontrasttasters, bei dem eine Kontrastmarke (19) mit Sendelicht (15) beaufschlagt wird, in Abhängigkeit von dem von der Kontrastmarke (19) reflektierten Sendelicht (23) ein Empfangssignal (S) erzeugt wird und das Empfangssignal (S) verstärkt wird,
wobei in einem "teach-in"-Schritt ermittelt wird, ob die Kontrastmarke (19) das Sendelicht (15) entsprechend einer Kategorie der diffusen Reflexion diffus reflektiert oder remittiert, oder ob die Kontrastmarke (19) das Sendelicht (15) entsprechend einer Kategorie der geometrischen Reflexion im wesentlichen frei von Absorption und Streuung reflektiert, wobei für die Ermittlung der Kategorie der Reflexion überprüft wird, ob das Empfangssignal (V1) einen vorbestimmten Unterscheidungspegel (U1) unterschreitet, der einem Wert zwischen 70% und 90% des Ausgangsdynamikbereichs der Verstärkung (A1) des Empfangssignals (V1) entspricht, und
wobei allein in Abhängigkeit von der ermittelten Kategorie der Reflexion der Kontrastmarke ein Verstärkungsfaktor (A1, A2, A3) für die Verstärkung des Empfangssignals (S) ausgewählt wird,
wobei der "teach-in"-Schritt und die Auswahl des Verstärkungsfaktors (A1, A2, A3) gegebenenfalls wiederholt werden, bis das Empfangssignal den Unterscheidungspegel unterschreitet, wobei
vor jeder Wiederholung des "teach-in"-Schritts der Verstärkungsfaktor (A1, A2, A3) verringert wird.

2. Verfahren nach Anspruch 1,
**dadurch gekennzeichnet,**
**dass** vor dem "teach-in"-Schritt der Unterscheidungspegel (U1) auf einen Wert vorbestimmt wird, welcher dem Empfangssignal (W) einer diffus reflektierenden weißen Kontrastmarke entspricht.

3. Verfahren nach einem der vorherigen Ansprüche,
**dadurch gekennzeichnet,**
**dass** für die Ermittlung der Kategorie der Reflexion das Empfangssignal (S) zunächst mit einem vorbestimmten Verstärkungsfaktor (A1) verstärkt wird, der insbesondere der Kategorie der diffusen Reflexion entspricht.

4. Verfahren nach einem der vorherigen Ansprüche,
**dadurch gekennzeichnet,**
**dass** der Verstärkungsfaktor (A1, A2, A3) durch entsprechende Änderung der bei der Verstärkung des Empfangssignals (S) verwendeten Integrationszeit verringert wird.

5. Verfahren nach einem der vorherigen Ansprüche,
**dadurch gekennzeichnet,**
**dass** in dem "teach-in"-Schritt außerdem ermittelt wird, ob die Kontrastmarke (19) das Sendelicht (15) entsprechend einer Kategorie der dunklen diffusen Reflexion dunkel diffus reflektiert oder remittiert, oder ob die Kontrastmarke (19) das Sendelicht (15) entsprechend einer Kategorie der hellen diffusen Reflexion hell diffus reflektiert oder remittiert.

6. Verfahren nach Anspruch 5,
**dadurch gekennzeichnet,**
**dass** in dem "teach-in"-Schritt überprüft wird, ob das Empfangssignal (V1) einen weiteren vorbestimmten Unterscheidungspegel (U2) überschreitet oder unterschreitet.

7. Verfahren nach einem der vorherigen Ansprüche,
**dadurch gekennzeichnet,**
**dass** in Abhängigkeit von der ermittelten Kategorie der Reflexion eine Betriebsschaltschwelle bestimmt wird.

8. Verfahren nach einem der vorherigen Ansprüche,
**dadurch gekennzeichnet,**
**dass** der "teach-in"-Schritt und die Auswahl des Verstärkungsfaktors (A1, A2, A3) vor einer nachfolgenden Detektion einer Serie von Kontrastmarken (19) durchgeführt werden, und/oder
**dass** der "teach-in"-Schritt und die Auswahl des Verstärkungsfaktors (A1, A2, A3) während einer Detektion einer Serie von Kontrastmarken (19) regelmäßig durchgeführt werden.

9. Verfahren nach einem der vorherigen Ansprüche,
**dadurch gekennzeichnet,**
**dass** der "teach-in"-Schritt und die Auswahl des Verstärkungsfaktors (A1, A2, A3) für mehrere, insbesondere drei verschiedene Wellenlängenbereiche des Sendelichts (15) separat durchgeführt werden.

10. Optoelektronischer Kontrasttaster mit
- einem Sender (13) zum Aussenden von Sendelicht (15),
- einem Empfänger (27) zum Empfangen des von einer Kontrastmarke (19) reflektierten Sendelichts (23) und zum Erzeugen eines entsprechenden Empfangssignals (S),
- einem Verstärker (29) zur Verstärkung des Empfangssignals (S) mit einem Verstärkungsfaktor (A1, A2, A3),
- einer Auswerteeinheit (31) zur Auswertung des verstärkten Empfangssignals (V1, V2, V3) und
- einer Steuereinheit (31);
wobei die Steuereinheit (31) derart ausgebildet ist,
dass in einem "teach-in"-Schrit ermittelbar ist, ob die Kontrastmarke (19) das Sendelicht (15) entsprechend einer Kategorie der diffusen Reflexion diffus reflektiert oder remittiert, oder ob die Kontrastmarke (19) das Sendelicht (15) entsprechend einer Kategorie der geometrischen Reflexion im wesentlichen frei von Absorption und Streuung reflektiert, wobei für die Ermittlung der Kategorie der Reflexion überprüfbar ist, ob das Empfangssignal (V1) einen vorbestimmten Unterscheidungspegel (U1) unterschreitet, der einem Wert zwischen 70% und 90% des Ausgangsdynamikbereichs der Verstärkung (A1) des Empfangssignals (V1) entspricht;
dass allein in Abhängigkeit von der ermittelten Kategorie der Reflexion der Kontrastmarke ein Verstärkungsfaktor (A1, A2, A3) für die Verstärkung des Empfangssignals (S) auswählbar ist; und
dass der "teach-in"-Schritt und die Auswahl des Verstärkungsfaktors (A1, A2, A3) gegebenenfalls wiederholbar sind, bis das Empfangssignal den Unterscheidungspegel unterschreitet, wobei vor jeder Wiederholung des "teach-in"-Schritts der Verstärkungsfaktor (A1, A2, A3) verringert wird.

## Claims

1. A method for the operation of an optoelectronic contrast sensor,
wherein a contrast mark (19) is acted on by transmitted light (15), a received signal (S) is generated in dependence on the transmitted light (23) reflected from the contrast mark (19) and the received signal (S) is amplified,
wherein it is determined in a "teach-in" step whether the contrast mark (19) diffusely reflects or remits the transmitted light (15) in accordance with a category of diffuse reflection or whether the contrast mark (19) reflects the transmitted light (15) substantially free of absorption and scattering in accordance with a category of geometrical reflection, wherein a check is made for the determination of the category of reflection whether the received signal (V1) falls below a predetermined distinguishing level (U1) corresponding to a value between 70% and 90% of the output dynamic range of the amplification (A1) of the received signal (V1); and
wherein an amplification factor (A1, A2, A3) for the amplification of the received signal (S) is selected solely in dependence on the determined category of reflection of the contrast mark;
wherein the teach-in step and the selection of the amplification factor (A1, A2, A3) are optionally repeated until the received signal falls below the distinguishing level, with the amplification factor (A1, A2, A3) being reduced before each repetition of the teach-in step.

2. A method in accordance with claim 1, **characterised in that** the distinguishing level (U1) is preset before the teach-in step to a value which corresponds to the received signal (W) of a diffusely reflecting white contrast mark.

3. A method in accordance with any one of the preceding claims, **characterised in that** the received signal (S) is first amplified by a preset amplification factor (A1), which in particular corresponds to the category of diffuse reflection, for the determination of the category of reflection.

4. A method in accordance with any one of the preceding claims, **characterised in that** the amplification factor (A1, A2, A3) is reduced by a corresponding change in the integration time used in the amplification of the received signal (S).

5. A method in accordance with any one of the preceding claims, **characterised in that** it is additionally determined in the teach-in step whether the contrast mark (19) darkly diffusely reflects or remits the transmitted light (15) in accordance with a category of dark diffuse reflection or whether the contrast mark (19) brightly diffusely reflects or remits the transmitted light (15) in accordance with category of bright diffuse reflection.

6. A method in accordance with claim 5, **characterised in that** a check is made in the teach-in step whether the received signal (V1) exceeds or falls below a further predetermined distinguishing level (U2).

7. A method in accordance with any one of the preceding claims, **characterised in that** an operating switching threshold is determined in dependence on the determined category of reflection.

8. A method in accordance with any one of the preceding claims, **characterised in that** the teach-in step and the selection of the amplification factor (A1, A2, A3) are carried out before a subsequent detection of a series of contrast marks (19); and/or **in that** the teach-in step and the selection of the amplification factor (A1, A2, A3) are carried out regularly during a detection of a series of contrast marks (19).

9. A method in accordance with any one of the preceding claims, **characterised in that** the teach-in step and the selection of the amplification factor (A1, A2, A3) are carried out separately for a plurality of different wavelength regions, in particular three different wavelength regions, of the transmitted light (15).

10. An optoelectronic contrast sensor comprising
- a transmitter (13) for the transmission of the transmitted light (15);
- a receiver (27) for the reception of the transmitted light (23) reflected by a contrast mark (19) and for the generation of a corresponding received signal (S);
- an amplifier (29) for the amplification of the received signal (S) by an amplification factor (A1, A2, A3);
- an evaluation unit (31) for the evaluation of the amplified received signal (V1, V2, V3); and
- a control unit (31),
wherein the control unit (31) is made such that it is determined in a teach-in step whether the contrast mark (19) diffusely reflects or remits the transmitted light (15) in accordance with a category of diffuse reflection or whether the contrast mark (19) reflects the transmitted light (15) substantially free of absorption and scattering in accordance with a category of geometrical reflection,
wherein a check can be made for the determination of the category of reflection whether the received signal (V1) falls below a predetermined distinguishing level (U1) corresponding to a value between 70% and 90% of the output dynamic range of the amplification (A1) of the received signal (V1); that an amplification factor (A1, A2, A3) for the amplification of the received signal (S) is selected solely in dependence on the determined category of the reflection of the contrast mark; and that the teach-in step and the selection of the amplification factor (A1, A2, A3) can optionally be repeated until the received signal falls below the distinguishing level, with the amplification factor (A1, A2, A3) being reduced before each repetition of the teach-in step.

## Revendications

1. Procédé pour le fonctionnement d'un détecteur de contraste optoélectronique, dans lequel une marque de contraste (19) est illuminée par une lumière émise (15), un signal de réception (S) est produit en fonction de la lumière émise (23) réfléchie par la marque de contraste (19), et le signal de réception (S) est amplifié,
dans lequel, dans une étape "d'apprentissage", on détermine si la marque de contraste (19) réfléchit de façon diffuse ou réémet la lumière émise (15) selon une catégorie de la réflexion diffuse, ou bien si la marque de contraste (19) réfléchit la lumière émise (15) selon une catégorie de réflexion géométrique essentiellement exempte d'absorption et de diffusion, dans lequel pour la détermination de la catégorie de réflexion, on vérifie si le signal de réception (V1) passe au-dessous d'un niveau de distinction prédéterminé (U1) qui correspond à une valeur entre 70 % et 90 % de la plage dynamique de départ de l'amplification (A1) du signal de réception (V1), et
uniquement en fonction de la catégorie déterminée de réflexion de la marque de contraste, on choisit un facteur d'amplification (A1, A2, A3) pour l'amplification du signal de réception (S),
l'étape d'apprentissage et la sélection du facteur d'amplification (A1, A2, A3) sont le cas échéant répétées jusqu'à ce que le signal de réception passe au-dessous du niveau de distinction, et avant chaque répétition de l'étape d'apprentissage, le facteur d'amplification (A1, A2, A3) est diminué.

2. Procédé selon la revendication 1, **caractérisé en ce que**, avant l'étape d'apprentissage, le niveau de distinction (U1) est prédéterminé à une valeur qui correspond au signal de réception (W) d'une marque de contraste blanche qui réfléchit de façon diffuse.

3. Procédé selon l'une des revendications précédentes, **caractérisé en ce que**, pour la détermination de la catégorie de la réflexion, le signal et de réception (S) est amplifié tout d'abord avec un facteur d'amplification prédéterminé (A1) qui correspond en particulier à la catégorie de la réflexion diffuse.

4. Procédé selon l'une des revendications précédentes, **caractérisé en ce que** le facteur d'amplification (A1, A2, A3) est réduit par modification correspondante du temps d'intégration utilisé pour l'amplification du signal de réception (S).

5. Procédé selon l'une des revendications précédentes, **caractérisé en ce que** l'on détermine en outre, lors de l'étape d'apprentissage, si la marque de contraste (19) réfléchit ou réémet la lumière émise (15) de manière sombre et diffuse en correspondance d'une catégorie de réflexion sombre diffuse, ou si la marque de contraste (19) réfléchit ou réémet la lumière émise (15) de manière claire et diffuse en correspondance d'une catégorie de réflexion claire diffuse.

6. Procédé selon la revendication 5, **caractérisé en ce que** l'on vérifie, lors de l'étape d'apprentissage, si le signal de réception (V1) passe au-dessus ou au-dessous d'un autre niveau de distinction prédéterminé (U2).

7. Procédé selon l'une des revendications précédentes, **caractérisé en ce que** l'on détermine un seuil de commutation de mode en fonction de la catégorie de réflexion déterminée.

8. Procédé selon l'une des revendications précédentes, **caractérisé en ce que** l'étape d'apprentissage et la sélection du facteur d'amplification (A1, A2, A3) sont exécutées avant une détection successive d'une série de marques de contraste (19), et/ou **en ce que** l'étape d'apprentissage et la sélection du facteur d'amplification (A1, A2, A3) sont exécutées régulièrement pendant la détection d'une série de marques de contraste (19).

9. Procédé selon l'une des revendications précédentes, **caractérisé en ce que** l'étape d'apprentissage et la sélection du facteur d'amplification (A1, A2, A3) sont exécutées séparément pour plusieurs plages de longueurs d'ondes différentes de la lumière émise (15), en particulier trois plages de longueurs d'ondes.

10. Détecteur de contraste optoélectronique, comprenant :
- un émetteur (13) pour émettre de la lumière émise (15),
- un récepteur (27) pour recevoir la lumière émise (23) réfléchie par une marque de contraste (19) et pour engendrer un signal de réception correspondant (S),
- un amplificateur (29) pour amplifier le signal de réception (S) avec un facteur d'amplification (A1, A2, A3),
- une unité d'évaluation (31) pour évaluer le signal de réception amplifié (V1, V2, V3), et
- une unité de commande (31) ;
ladite unité de commande (31) étant réalisée de telle façon que :
dans une étape d'apprentissage, il est possible de déterminer si la marque de contraste (19) réfléchit ou réémet de manière diffuse la lumière émise (15) selon une catégorie de la réflexion diffuse, ou bien si la marque de contraste (19) réfléchit la lumière émise (15) selon une catégorie de réflexion géométrique essentiellement exempte d'absorption et de diffusion, dans lequel pour la détermination de la catégorie de réflexion, il est possible de vérifier si le signal de réception (V1) passe au-dessous d'un niveau de distinction prédéterminé (U1) qui correspond à une valeur entre 70 % et 90 % de la plage dynamique de départ de l'amplification (A1) du signal de réception (V1) ;
en ce qu'un facteur d'amplification (A1, A2, A3) peut être choisi pour l'amplification du signal de réception (S) uniquement en fonction de la catégorie déterminée de la réflexion de la marque de contraste ; et
en ce que l'étape d'apprentissage et la sélection du facteur d'amplification (A1, A2, A3) peuvent le cas échéant être répétées jusqu'à ce que le signal de réception passe au-dessous du niveau de distinction, et avant chaque répétition de l'étape d'apprentissage le facteur d'amplification (A1, A2, A3) est diminué.
